(19) Europäisches Patentamt / European Patent Office / Office européen des brevets

(11) **EP 2 896 971 B1**

(12) # EUROPEAN PATENT SPECIFICATION

(45) Date of publication and mention of the grant of the patent:
**23.03.2016 Bulletin 2016/12**

(51) Int Cl.:
***G01S 13/90*** *(2006.01)*

(21) Application number: **14169332.5**

(22) Date of filing: **21.05.2014**

(54) **Spaceborne Multi-Channel Synthetic Aperture Radar Imaging Device**

Weltraumgestütztes Mehrkanalradar-Bildgebungsvorrichtung mit synthetischer Apertur

Dispositif d'imagerie de radar à ouverture synthétique à plusieurs canaux spatiaux

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2014 CN 201410022806**

(43) Date of publication of application:
**22.07.2015 Bulletin 2015/30**

(73) Proprietor: **Institute of Electronics, Chinese Academy of Sciences**
**Beijing 100190 (CN)**

(72) Inventors:
• **Deng, Yunkai**
  100190 Beijing (CN)
• **Wang, Yu**
  100190 Beijing (CN)
• **Zhang, Zhimin**
  100190 Beijing (CN)
• **Yu, Weidong**
  100190 Beijing (CN)
• **Zhao, Fengjun**
  100190 Beijing (CN)
• **Wang, Wei**
  100190 Beijing (CN)
• **Guo, Lei**
  100190 Beijing (CN)
• **Wang, Chunle**
  100190 Beijing (CN)

(74) Representative: **Gulde & Partner**
**Patent- und Rechtsanwaltskanzlei mbB**
**Wallstraße 58/59**
**10179 Berlin (DE)**

(56) References cited:
**US-A1- 2009 109 086**

• **GERHARD KRIEGER ET AL: "Multidimensional Waveform Encoding: A New Digital Beamforming Technique for Synthetic Aperture Radar Remote Sensing", IEEE TRANSACTIONS ON GEOSCIENCE AND REMOTE SENSING, IEEE SERVICE CENTER, PISCATAWAY, NJ, US, vol. 46, no. 1, 1 January 2008 (2008-01-01), pages 31-46, XP011198512, ISSN: 0196-2892, DOI: 10.1109/TGRS.2007.905974**
• **GEBERT N ET AL: "Unambiguous SAR Signal Reconstruction From Nonuniform Displaced Phase Center Sampling", IEEE GEOSCIENCE AND REMOTE SENSING LETTERS, IEEE SERVICE CENTER, NEW YORK, NY, US, vol. 1, no. 4, 1 October 2004 (2004-10-01), pages 260-264, XP011120870, ISSN: 1545-598X, DOI: 10.1109/LGRS.2004.832700**
• **WEI XU ET AL: "Processing of Multichannel Sliding Spotlight and TOPS Synthetic Aperture Radar Data", IEEE TRANSACTIONS ON GEOSCIENCE AND REMOTE SENSING, IEEE SERVICE CENTER, PISCATAWAY, NJ, US, vol. 51, no. 8, 1 August 2013 (2013-08-01), pages 4417-4429, XP011521745, ISSN: 0196-2892, DOI: 10.1109/TGRS.2013.2265306**
• **BORDONI FEDERICA ET AL: "Calibration error model for multichannel spaceborne SAR systems based on Digital Beamforming", 2013 EUROPEAN RADAR CONFERENCE, EMA, 9 October 2013 (2013-10-09), pages 184-187, XP032533664, [retrieved on 2013-12-18]**

- **HEER C ET AL: "Digital beam forming synthetic aperture radar", 2005 IEEE MTT-S INTERNATIONAL MICROWAVE SYMPOSIUM, PISCATAWAY, NJ, USA,IEEE, 12 June 2005 (2005-06-12), pages 1627-1630, XP010845040, DOI: 10.1109/MWSYM.2005.1517018 ISBN: 978-0-7803-8846-8**

- **GEBERT N ET AL: "Digital Beamforming on Receive: Techniques and Optimization Strategies for High-Resolution Wide-Swath SAR Imaging", IEEE TRANSACTIONS ON AEROSPACE AND ELECTRONIC SYSTEMS, IEEE SERVICE CENTER, PISCATAWAY, NJ, US, vol. 45, no. 2, 1 April 2009 (2009-04-01), pages 564-592, XP011262853, ISSN: 0018-9251**

**Description**

**TECHNICAL FIELD**

The present disclosure relates to the design and implementation of a high-performance spaceborne multi-channel Synthetic Aperture Radar (SAR) system, and in particular to an elevation-directional Digital Beam Forming (DBF) and azimuth-directional multi-channel technique.

**BACKGROUND**

The most important problem facing the design of a high-performance spaceborne SAR system is how to implement simultaneously a high resolution in azimuth direction and a wide swath in range direction.

At present, for a conventional SAR system, in order to implement a high resolution in azimuth direction, it is required that there is a wide Doppler bandwidth in azimuth direction, and in order to make signal sampling comply with the Nyquist Sampling Theorem, the sampling rate in azimuth direction (i.e., pulse repetition frequency) of the system must be high enough. However, a high pulse repetition frequency may shorten an echo receive window of a radar system, thus decreasing the width of the swath. Therefore, a high resolution in azimuth direction and a wide swath in range direction is a contradiction.

Gerhard Krieger et al: "Multidimensional Waveform Encoding: A New Digital Beamforming Technique for Synthetic Aperture Radar Remote Sensing" (IEEE Transactions on Geoscience and Remote Sensing, IEEE Service Center, Piscataway, NJ, US, vol. 46, no. 1, 1 January 2008, pages 31-46) introduce the innovative concept of multidimensional waveform encoding for spaceborne synthetic aperture radar (SAR). The combination of this technique with digital beamforming on receive enables a new generation of SAR systems with improved performance and flexible imaging capabilities. Examples are high-resolution wide-swath radar imaging with compact antennas, enhanced sensitivity for applications like alongtrack interferometry and moving object indication, and the implementation of hybrid SAR imaging modes that are well suited to satisfy hitherto incompatible user requirements. Implementation-specific issues are discussed and performance examples demonstrate the potential of the new technique for different remote sensing applications.

Gerbert N. et al: "Unambiguous SAR signal reconstruction from nonuniform displaced phase center sampling" (IEEE Geoscience and Remote Sensing Letters, IEEE Service Center, NJ, US, vol. 1, no. 4, 1 October 2004, pages 260-264) derive an innovative reconstruction algorithm and shows that an unambiguous reconstruction of a SAR signal is possible for nonuniform sampling of the synthetic aperture. This algorithm will also have great potential for multistatic satellite constellations as well as the dual receive antenna mode in Radarsat 2 and TerraSAR-X.

Bordoni F. et al: "Calibration Error Model for Multichannel Spaceborne SAR Systems Based on Digital Beamforming" (2013 European Radar Conference EMA, 9 October 2013, pages 184-187) provides a model of residual calibration error in multichannel spaceborne SAR systems based on Digital Beamforming (DBF). To sum up, how to implement simultaneously a high resolution in azimuth direction and a wide swath in range direction is an urgent problem to be solved at present.

**SUMMARY**

(1) Technical problem to be solved

In view of the above, in order to solve the technical problem in the prior art that to implement a wide swath, a transmit beam must have an enough width in elevation direction, but in this way the signal energy is lowered and the system performance is reduced, the present disclosure is intended to provide a spaceborne multi-channel SAR imaging device which implements simultaneously a high resolution in azimuth direction and a wide swath in range direction.

(2) Technical solutions

To this end, the spaceborne multi-channel SAR imaging device includes a plurality of paths of elevation-directional receiving antenna assemblies, a plurality of paths of azimuth-directional receiving antenna assemblies, a plurality of paths of elevation-directional digital beam forming units, an azimuth-directional spectrum reconstruction unit and a SAR imaging device, wherein the plurality of paths of elevation-directional receiving antenna assemblies are arranged equidistantly in elevation direction of the multi-channel SAR imaging system; each path of the plurality of elevation-directional receiving antenna assemblies receives a radar echo, and generates a path of elevation-directional echo data; the echo data received by the plurality of paths of elevation-directional receiving antenna assemblies forms a path of echo signal after passing through the elevation-directional digital beam forming unit, a plurality of paths of elevation-directional receiving antennas corresponding to the path of echo signal serve as a column of receiving antennas;

the plurality of columns of azimuth-directional receiving antenna assemblies are arranged in azimuth direction of the multi-channel SAR imaging system; each column of azimuth-directional receiving antenna assemblies receives radar echoes, and outputs a path of azimuth-directional echo data, wherein the plurality of columns of azimuth-directional receiving antenna assemblies generate a plurality of paths of echo signals after passing through respective digital beam forming unit, and the plurality of paths of echo signals enter the azimuth-directional spectrum reconstruction unit to implement azimuth-directional spectrum reconstruction; the azimuth-directional spectrum reconstruction unit, with its input ends connected respectively with output ends of the plurality of paths of elevation-directional digital beam forming units, is configured to perform azimuth-directional spectrum reconstruction on echo signals outputted from the digital beam forming units, generate and output a SAR echo signal; and the imaging device, with its input end connected with the output end of the azimuth-directional spectrum reconstruction unit, is configured to receive the SAR echo signal and generate a SAR image from the SAR echo signal.

(3) Beneficial effects

Regarding a feature that a swath width and a resolution in azimuth direction of a conventional SAR system can't be improved simultaneously, aimed at the problem that if a wide swath is implemented, a transmit beam must have an enough width in elevation direction, but in this way the signal energy is lowered and the system performance is reduced, it is provided in the present disclosure that multiple evenly-aligned receiving antennas are arranged in elevation direction so that, by the digital beam forming technique, the antenna array generates an orientation-adjustable high-gain narrow beam, when a signal is received, the beam angle is adjusted in real time as the incoming beam direction varies, thus maximizing the energy of the echo and improving the imaging performance of the system; aimed at a feature that a swath width and a resolution in azimuth direction of a conventional SAR system can't be improved simultaneously, the present disclosure provides that a plurality of columns of antennas are arranged in flight path direction so that, by an azimuth-directional multi-channel reception, the resolution in azimuth direction is improved without an increased Pulse Repetition Frequency (PRF), thus a great swath width can be implemented.

## BRIEF DESCRIPTION OF THE DRAWINGS

Fig. 1 is a schematic diagram of a spaceborne multi-channel Synthetic Aperture Radar (SAR) imaging device according to the present disclosure;

Fig. 2 is a schematic diagram of an azimuth-directional multiple channels according to the present disclosure;

Fig. 3 is a schematic diagram of a multi-channel reconstruction theory according to the present disclosure;

Fig. 4 is a schematic diagram of an elevation-directional multiple channels according to the present disclosure;

Fig. 5 is a schematic flowchart of an elevation-directional DBF processing according to the present disclosure;

Fig. 6 is a schematic diagram of a SAR system in a first embodiment according to the present disclosure;

Fig. 7 is a beam position selection diagram of a SAR system in a first embodiment according to the present disclosure;

Fig. 8 is a NESZ curve of a SAR system in a first embodiment according to the present disclosure;

Fig. 9 is a RASR curve of a SAR system in a first embodiment according to the present disclosure;

Fig. 10 is a flowchart of an azimuth-directional spectrum reconstruction according to the present disclosure; and

Fig. 11 is a flowchart according to embodiments of the present disclosure.

## DETAILED DESCRIPTION

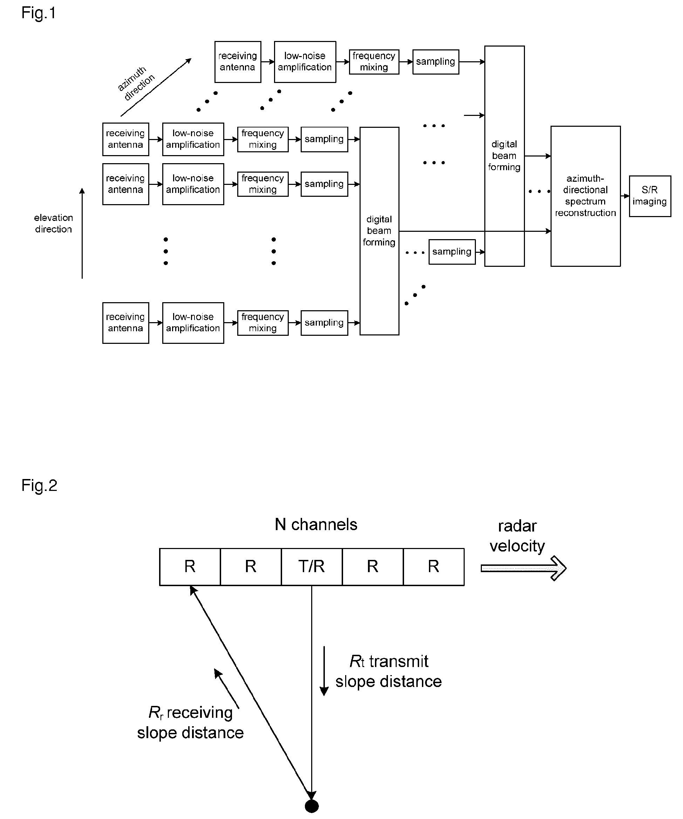

The present disclosure will be further described in detail with reference to accompanying drawings and embodiments.
Referring to Fig.1, Fig. 10 and Fig. 11, a high-performance multi-channel SAR system according to the present disclosure includes: a plurality of paths of elevation-directional receiving antenna assemblies, a plurality of paths of azimuth-directional receiving antenna assemblies, a plurality of paths of elevation-directional digital beam forming units, an azimuth-directional spectrum reconstruction unit and a SAR imaging device, wherein the plurality of paths of elevation-directional receiving antenna assemblies are arranged equidistantly in elevation direction of the multi-channel SAR imaging system; each path of plurality of elevation-directional receiving antenna assemblies receives a radar echo, and generates a path of elevation-directional echo data; the echo data received by the plurality of paths of elevation-directional receiving antenna assemblies forms a path of echo signal after passing through the elevation-directional digital beam forming unit, a plurality of paths of elevation-directional receiving antennas corresponding to the path of echo signal serve as a column of receiving antennas; the plurality of columns of azimuth-directional receiving antenna assemblies are arranged in azimuth direction of the multi-channel SAR imaging system; each column of azimuth-directional receiving antenna assemblies receives radar echoes, and outputs a path of azimuth-directional echo data, wherein the plurality of columns of azimuth-directional receiving antenna assemblies generate a plurality of paths of echo signals after passing through respective digital beam forming unit, and the plurality of paths of echo signals enter the azimuth-directional spectrum reconstruction unit to implement azimuth-directional spectrum reconstruction; the azimuth-directional spectrum reconstruction unit, with its input ends connected respectively with output ends of the plurality of paths of elevation-directional digital beam forming units, is configured to perform azimuth-directional spectrum reconstruction on echo signals outputted from the digital beam forming units, generate and output a SAR echo signal; and the imaging device, with its input end connected with the output end of the azimuth-directional spectrum reconstruction unit, is configured to receive the SAR echo signal and generate a SAR image from the SAR echo signal.

Specifically, each path of elevation-directional receiving antenna assembly comprise a path of elevation-directional receiving sub antenna, and a pattern of each path of elevation-directional receiving sub antenna covers a whole swath to receive echoes within the swath.

Specifically, each column of azimuth-directional receiving antenna assembly comprise a column of azimuth-directional receiving sub antennas, and patterns of each column of azimuth-directional receiving sub antennas cover a whole swath to receive echoes within the swath.

Specifically, a model of the radar echo signals received by the elevation-directional receiving antenna assemblies is represented as below

$$r_n(t) = \gamma \cdot \text{rect}\left[\frac{t - t_n}{T_p}\right] \cdot \exp\left[jK_r\pi(t - t_n)^2\right]$$
$$\cdot \exp[-j2\pi f_c t_n],$$

wherein $\gamma$ represents a constant related to a target scattering coefficient and a gain of an antenna pattern, $t$ represents a fast time, $t_n$ represents a delay time for a transmit signal from a transmit channel to a target and then reflected back to a nth elevation-directional receiving antenna, $T_p$ is a pulse width, $j$ is an imaginary unit, $K_r$ is a frequency modulating rate, $f_c$ is a radar carrier frequency, $n = 1\cdots,N$, and the delay time $t_n$ is represented as below

$$t_n = t_0 - \frac{d_n \cdot \sin(\theta(t_0) - \beta)}{C}$$

$t_0$ represents a time delay for a transmit signal from a transmit channel to a target and then reflected back to a reference receiving channel; the reference receiving channel is selected as a receiving channel at the middle position in elevation direction; $\frac{d_n \cdot \sin(\theta(t_0) - \beta)}{C}$ in the model of the echo signals represents a signal delay difference between a nth receiving channel and the reference receiving channel, $d_n$ represents a distance between the nth receiving channel and the reference receiving channel, $\theta(t_0)$ represents a look-down angle of the target, $\beta$ represents a look-down angle of the normal of an antenna, also referred to as an antenna installation angle, and $C$ represents a transmission rate of a radar wave.

Specifically, it can be seen from the model of the echo signals that echoes of different reference receiving channels may have a phase difference such that they cannot be accumulated coherently, digital beam forming units can compensate the phase difference of each channel such that each antenna assembly receives a echo coherent signal, which is finally accumulated together in a digital beam forming module unit to form a path of output signal, and the process for forming the output signal is equivalent to a process for forming a high-gain pencil beam; an orientation of a narrow beam is adjusted by changing in real time a real-time weighted value of each channel during synthesis so that it tracks and receives reflection echoes from the earth, thus implementing high-gain reception and improving sensitivity of a radar.

Specifically, the real-time weighted value $w_k(t)$ of each channel is represented as below

$$w_k(t) = \exp\left(-j2\pi\frac{d_n}{\lambda}\sin\left(\theta(t) - \beta\right)\right)$$

wherein $\lambda$ is a wave length corresponding to a radar carrier, and $\theta(t)$ represents a look-down angle corresponding to an echo at a time $t$.

Specifically, the echo coherent signal $R(t)$ is represented as below

$$R(t) = \gamma \cdot N \cdot \mathrm{rect}\left[\frac{t-t_0}{T_p}\right] \cdot \exp\left[jK_r\pi(t-t_0)^2\right] \cdot \exp\left[-j2\pi f_c t_0\right]$$

Specifically, by a multi-channel sampling in azimuth direction of a plurality of columns of azimuth-directional receiving antenna assemblies, pulse repetition frequency is lowered, but for each azimuth-directional receiving antenna assembly, an azimuth-directional signal is under-sampled, the azimuth-directional signal $u_n(\tau)$ received by a nth column of receiving channels is represented as below

$$u_n(\tau) = \gamma \cdot \exp\left[-j\frac{2\pi}{\lambda}\left(\sqrt{R_0^2 + (V_s\tau)^2} + \sqrt{R_0^2 + (V_s\tau - \Delta x_n)^2}\right)\right]$$

wherein $\tau$ represents a slow time, $R_0$ represents minimal slant range between the radar and the target, $V_s$ represents the radar velocity, and $\Delta x_n$ represents the distance in azimuth direction between the nth column of receiving channels and the transmit channel.

Specifically, an azimuth-directional spectrum reconstruction unit acquires pre-filtered signals by pre-filtering azimuth-directional signals with a B bandwidth by N pre-filters based on the multi-channel data reconstruction theory, and each of the pre-filtered signals is sampled in a B/N sampling rate, then original low-pass signals are recovered from sampling signals of N channels by reconstruction filters, which are obtained from transfer functions of the pre-filters prior to data sampling.

Step 101: multiple evenly-aligned receiving antennas are arranged in elevation direction, a high-gain narrow beam is formed and its orientation is adjusted in real time to track a receiving echo from the earth by the digital beam forming technique, thus implementing a high-gain reception. Signals acquired by each receiving antenna assembly all enter a digital beam forming processor for processing, the output of which is a synthesized echo signal.

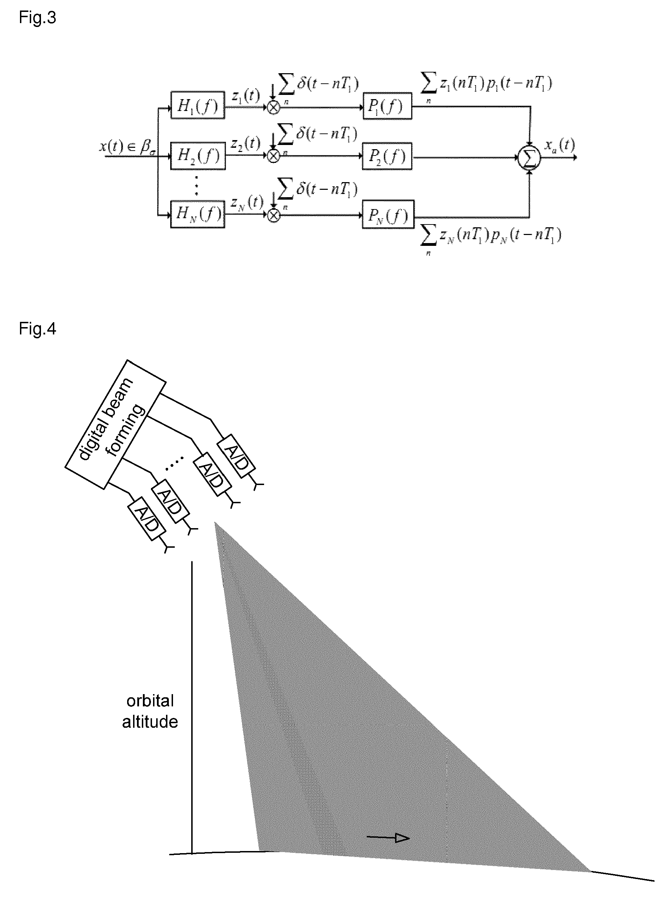

Fig. 4 shows a schematic diagram of an elevation-directional multi-channel reception. The antenna system is a planar phased array antenna system, the orbital altitude is a radar's orbital altitude. Each elevation-directional channel samples the received echoes by an A/D convertor, and the echoes are accumulated coherently in the rear end by an elevation-directional digital beam forming technique.

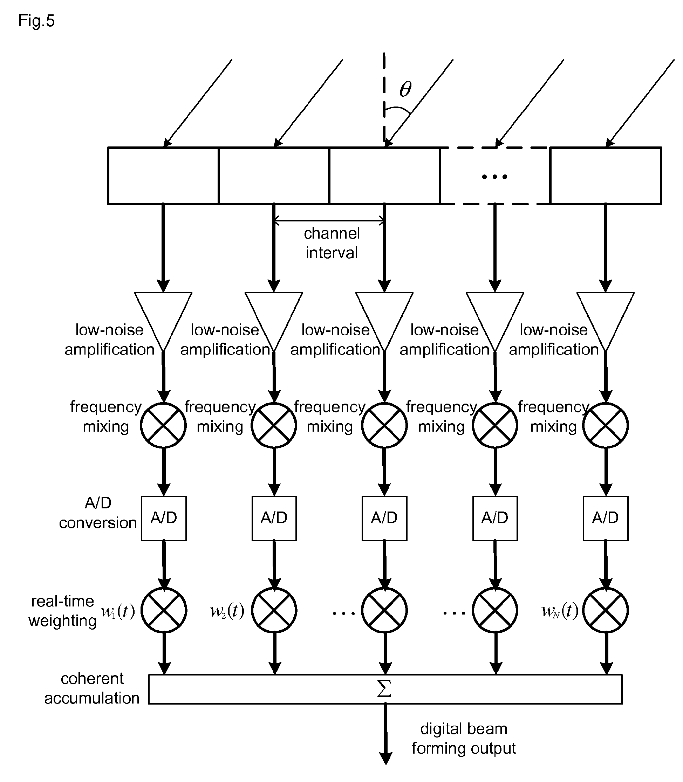

Fig. 5 is a schematic flowchart of an elevation-directional DBF processing according to the present disclosure. Each channel receives an echo, and the echo is sampled by a plurality of paths of low-noise amplifying units, a plurality of paths of frequency mixing units, and a plurality of paths of A/D converters, the sampled signals are accumulated coherently as a path of signal by a digital beam forming technique after being weighted in real time. The real-time weighted value $w_n(t)$ of each channel is represented as below

$$w_n(t) = \exp\left(-j2\pi d_n \sin\left(\theta(t)\right) / \lambda\right)$$

wherein $d_n$ represents a distance between the nth channel and a transmit channel, $\theta(t)$ is an incoming beam direction corresponding to time t, $\lambda$ is a wave length corresponding to a radar carrier.

The range-directional pattern finally synthesized is represented as below (at the time of $t_0$)

$$F(\alpha) = \frac{\sin\left(N\pi d\left(\sin(\alpha) - \sin(\theta(t_0))\right)/\lambda\right)}{\sin\left(\pi d\left(\sin(\alpha) - \sin(\theta(t_0))\right)/\lambda\right)}$$

Step 102: A plurality of columns of receiving antenna assemblies are arranged in a flight path direction of a radar, so that each receiving channel can cover an irradiation region, output signals of a digital beam forming module of each column of receiving antenna assemblies are inputted into a Doppler spectrum reconstruction module, then the Doppler spectrum is recovered by an azimuth-directional multi-channel reconstruction technique.

Specifically, Fig. 2 shows a schematic diagram of an azimuth-directional multiple channels, wherein R represents a receiving channel, and T/R represents a transceiving channel. N channels and multiple receiving antenna assemblies are arranged in a flight path direction of a radar (i.e., azimuth direction), since respective antenna assemblies are at different azimuth-directional positions when receiving a same echo, an equivalent phase center of each channel can be acquired with reference to positions of radar transmit channels, and the echo of each channel is equivalent to a signal self-transmitted and self-received by a antenna at an equivalent phase center corresponding to each channel. If an azimuth-directional signal is defined as $U(f)$, the signal acquired on each channel is equivalent to an azimuth-directional signal passing through a pre-filter. The azimuth-directional signal acquired on a nth channel may be defined as $U_n(f)$, with its pre-filter being $H_n(f)$.

Fig. 3 shows a schematic diagram of a multi-channel reconstruction theory according to the present disclosure. There is a general multi-channel data reconstruction theory in mathematics, which says that after signals with bandwidth of B pass through N pre-filters, the signals after the pre-filters are sampled in a sampling rate of B/N, then the original low-pass signals can be recovered from the sampling signals of the N channels by designing appropriate reconstruction filters, as shown in Fig. 3. The data reconstruction filters can be acquired from transfer functions of the pre-filters prior to data sampling.

Azimuth-directional signals of SAR system in Fig. 3 comply with features of the above reconstruction theory, so according to the above reconstruction theory, the Doppler spectrum can be recovered by using data of multiple channels, so as to facilitate subsequent imaging process. The pre-filters are formed by a plurality of columns of azimuth-directional receiving antenna assemblies, the matrix $H(f)$ formed by the pre-filters is represented as below

$$H(f) = \begin{bmatrix} H_1(f) & H_2(f) & \cdots & H_N(f) \\ H_1(f+PRF) & H_2(f+PRF) & \cdots & H_N(f+PRF) \\ \vdots & \vdots & \ddots & \vdots \\ H_1(f+(N-1)PRF) & H_2(f+(N-1)PRF) & \cdots & H_N(f+(N-1)PRF) \end{bmatrix}$$

wherein $H_n(f)$ represents a pre-filter of a nth column of azimuth-directional channels, $f$ represents an azimuth-directional frequency, PRF represent a pulse repetition frequency, and the relation between the reconstruction filters $P(f)$ and $H(f)$ is represented as

$$P(f) = H^{-1}(f) = \begin{bmatrix} P_{11}(f) & P_{12}(f+PRF) & \cdots & P_{1N}(f+(N-1)PRF) \\ P_{21}(f) & P_{22}(f+PRF) & \cdots & P_{2N}(f+(N-1)PRF) \\ \vdots & \vdots & \ddots & \vdots \\ P_{N1}(f) & P_{N2}(f+PRF) & \cdots & P_{NN}(f+(N-1)PRF) \end{bmatrix}$$

azimuth-directional spectra are recovered by using the acquired reconstruction filters, so as to generate echoes for radar imaging.

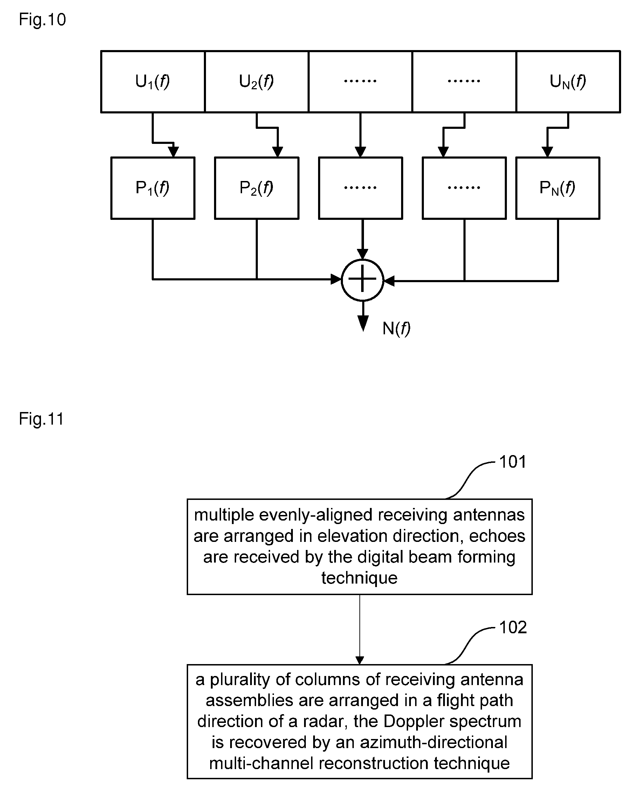

Fig. 10 is a flowchart of an azimuth-directional spectrum reconstruction. wherein $U_n(f)$ are azimuth-directional signals of echoes outputted by the nth column of digital beam forming units in azimuth direction, $U(f)$ is an azimuth-directional spectrum finally recovered. n= 1, 2, ⋯, N.

The present disclosure will be described in detail with reference to an embodiment below.

First embodiment

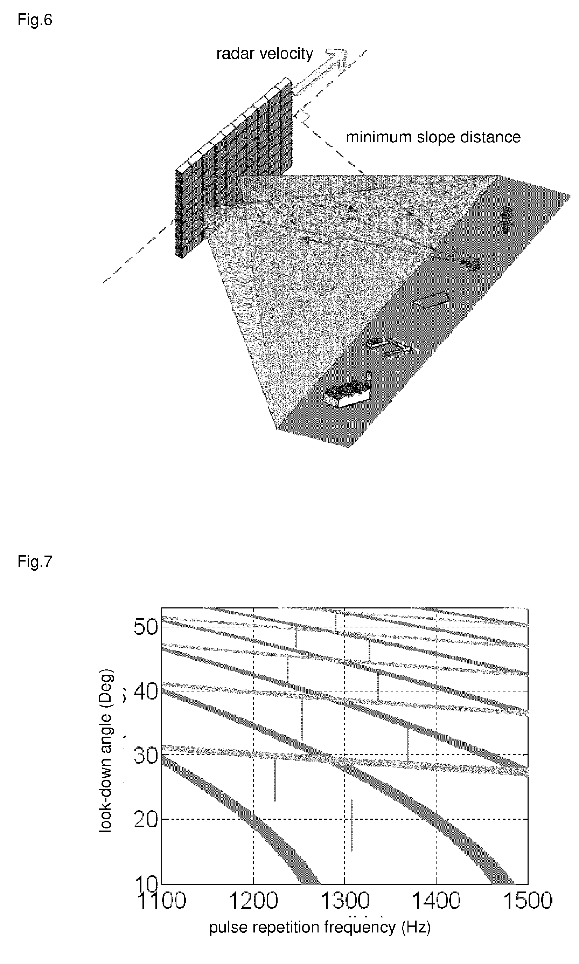

As shown in Fig. 6, in this embodiment, an example of a high-performance spaceborne SAR system based on azimuth-directional multiple channels and range-directional DCF is designed. The design parameters of the system are as below

Table 1

| Transmit signal carrier frequency | 9.6 GHz |
|---|---|
| Orbital altitude | 700 km |
| Number of channels in azimuth direction | 10 |
| Number of channels in elevation direction | 10 |
| Total length of antenna in azimuth direction | 12 m |
| Total height of antenna in elevation direction | 2 m |
| Transmit peak power | 40000 w |
| PRF range | 1224 Hz-1369 Hz |
| Transmit signal bandwidth | 600 MHz-250 MHz |
| Resolution in azimuth direction | 1 m |
| Resolution in range direction | 1 m |
| Swath breadth | 90 km |

Fig. 7 is a beam position selection diagram of a SAR system according to the embodiment, look-down angle is 15 degree to 52 degree. The swath breadth is 90 km, and the resolution in azimuth direction and in range direction both reaches to 1 m.

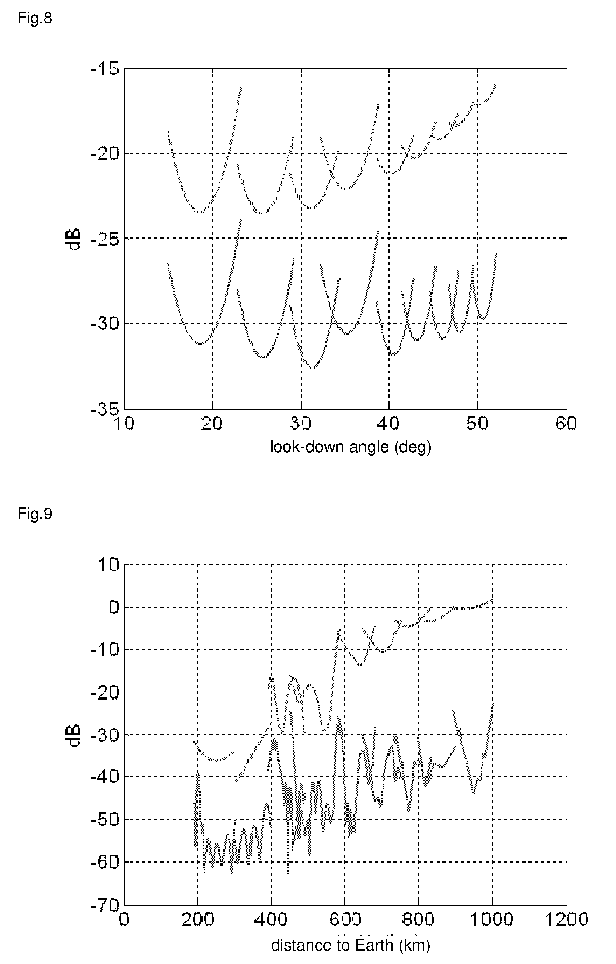

Fig. 8 is an equivalent backscattering coefficient (NESZ) curve, wherein the solid line represents the result of the design system, the dashed line represents a NESZ curve of a conventional single-channel SAR system. It can be seen from Fig. 8 that the spaceborne SAR system based on the embodiment has a higher sensitivity. Therefore, the performance of the system is improved greatly.

Fig. 9 is a range ambiguity (RASR) curve, wherein the solid line represents the range ambiguity result of the design system, the dashed line represents a RASR curve of a conventional single-channel SAR system. It can be seen from Fig. 9 that the range ambiguity values of the system based on the design are superior to those of the single-channel SAR system. Therefore, the ambiguity performance of the system is also improved greatly.

The above are merely the preferred embodiments of the present disclosure, and are not intended to limit the scope of protection of the claims of the present disclosure.

**Claims**

1. A spaceborne multi-channel Synthetic Aperture Radar, SAR, imaging system, comprising: a plurality of columns of receiving antennas and a plurality of elevation-directional digital beam forming units forming a plurality of receiving channels, an azimuth-directional spectrum reconstruction unit, a SAR imaging device, and a transmit channel, wherein
the plurality of columns of receiving antennas are arranged in the azimuth direction of the multi-channel SAR imaging system; each of the plurality of columns of receiving antennas includes a plurality of elevation-directional receiving antenna assemblies that are arranged equidistantly in the elevation direction of the multi-channel SAR imaging system and an elevation-directional digital beam forming unit; each of the plurality of elevation-directional receiving antenna assemblies being configured to receive a radar echo and to generate an elevation-directional echo data; the elevation-directional echo data received by the plurality of elevation-directional receiving antenna assemblies forming an echo signal after passing through the elevation-directional digital beam forming unit; wherein each receiving channel includes an elevation-directional receiving antenna assembly, a low-noise amplifier, a frequency mixer, a sampling circuit, and means for weighting, wherein a plurality of echo signals generated by the plurality of columns of receiving antennas enter the azimuth-directional spectrum reconstruction unit to implement azimuth-directional spectrum reconstruction;

the azimuth-directional spectrum reconstruction unit, with its input ends connected respectively with output ends of the plurality of elevation-directional digital beam forming units, is configured to perform azimuth-directional spectrum reconstruction on the plurality of echo signals outputted from the plurality of columns of receiving antennas, generate and output an SAR echo signal; and

the imaging device, with its input end connected with the output end of the azimuth-directional spectrum reconstruction unit, is configured to receive the SAR echo signal and generate a SAR image from the SAR echo signal,

wherein a model of the radar echo signal received by the elevation-directional receiving antenna assembly is represented as below

$$r_n(t) = \gamma \cdot \text{rect}\left[\frac{t - t_n}{T_p}\right] \cdot \exp\left[jK_r\pi(t - t_n)^2\right]$$
$$\cdot \exp[-j2\pi f_c t_n],$$

wherein $\gamma$ represents a constant related to a target scattering coefficient and a gain of an antenna pattern, $t$ represents a fast time, $t_n$ represents a delay time for a transmit signal from the transmit channel to a target and then reflected back to a nth elevation-directional receiving antenna, $T_p$ is a pulse width, $j$ is an imaginary unit, $K_r$ is a frequency modulating rate, $f_c$ is a radar carrier frequency, $n = 1, \cdots, N$, and the delay time $t_n$ is represented as below

$$t_n = t_0 - \frac{d_n \cdot \sin(\theta(t_0) - \beta)}{C}$$

$t_0$ represents a time delay for a transmit signal from the transmit channel to a target and then reflected back to a reference receiving channel; the reference receiving channel is selected as a receiving channel at the middle position in elevation direction; $\dfrac{d_n \cdot \sin(\theta(t_0) - \beta)}{C}$ in the model of the echo signals represents a signal delay difference between a nth receiving channel and the reference receiving channel, $d_n$ represents a distance between the nth receiving channel and the reference receiving channel, $\theta(t_0)$ represents a look-down angle of the target, $\beta$ represents a look-down angle of the normal of an antenna, also referred to as an antenna installation angle, and $C$ represents a transmission rate of a radar wave,

wherein the digital beam forming unit in each of the plurality of columns of receiving antennas is configured to compensate a phase difference of each receiving channel such that each antenna assembly receives an echo coherent signal, which is finally accumulated together in the digital beam forming unit to form an output signal, and to form the output signal to be a high-gain pencil beam; wherein an orientation of the high-gain pencil beam is adjusted by changing in real time a real-time weighted value of each receiving channel so that reflection echoes of the earth are received,

wherein a pattern of each column of receiving antennas covers a whole swath to receive echoes within the swath,

wherein the azimuth-directional spectrum reconstruction unit is further configured to acquire pre-filtered signals by pre-filtering azimuth-directional signals with a B bandwidth by N pre-filters based on the multi-channel data reconstruction theory, each of the pre-filtered signals being sampled in a B/N sampling rate, and original low-pass signals being recovered from sampling signals of N channels by reconstruction filters, which are obtained from transfer functions of the pre-filters prior to data sampling, the pre-filters being formed by using the plurality of columns of receiving antennas, the matrix $H(f)$ formed by the pre-filters is represented as

$$H(f) = \begin{bmatrix} H_1(f) & H_2(f) & \cdots & H_N(f) \\ H_1(f + PRF) & H_2(f + PRF) & \cdots & H_N(f + PRF) \\ \vdots & \vdots & \ddots & \vdots \\ H_1(f + (N-1)PRF) & H_2(f + (N-1)PRF) & \cdots & H_N(f + (N-1)PRF) \end{bmatrix}$$

wherein $H_n(f)$ represents a pre-filter of a nth column of azimuth-directional channels, $f$ represents an azimuth-directional frequency, PRF represent a pulse repetition frequency, and the relation between the reconstruction filters *P*(*f*) and *H*(*f*) is represented as

$$P(f) = H^{-1}(f) = \begin{bmatrix} P_{11}(f) & P_{12}(f+PRF) & \cdots & P_{1N}(f+(N-1)PRF) \\ P_{21}(f) & P_{22}(f+PRF) & \cdots & P_{2N}(f+(N-1)PRF) \\ \vdots & \vdots & \ddots & \vdots \\ P_{N1}(f) & P_{N2}(f+PRF) & \cdots & P_{NN}(f+(N-1)PRF) \end{bmatrix}$$

and azimuth-directional spectra being recovered by using the acquired reconstruction filters, so as to generate echoes for radar imaging, wherein $P_{ij}(f)$ represents a value of the reconstruction filter at a Doppler frequency of $f+(j-1)PRF$ in a ith azimuth-directional channel.

2. The spaceborne multi-channel SAR imaging system according to claim 1, **characterized in that** each of the plurality of elevation-directional receiving antenna assemblies comprise an elevation-directional receiving sub-antenna, and a pattern of each elevation-directional receiving sub-antenna covers a whole swath to receive echoes within the swath.

3. The spaceborne multi-channel SAR imaging system according to claim 1, **characterized in that** the real-time weighted value $w_k(t)$ of each channel is represented as below

$$w_k(t) = \exp\left(-j2\pi\frac{d_n}{\lambda}\sin(\theta(t) - \beta)\right)$$

wherein $t$ represent a fast time, $j$ is an imaginary unit, $d_n$ represents a distance between the nth receiving channel and the reference receiving channel, $\lambda$ is a wave length corresponding to a radar carrier, $\theta(t)$ represents a look-down angle corresponding to an echo at a time $t$, and $\beta$ represents a look-down angle of the normal of an antenna.

4. The spaceborne multi-channel SAR imaging system according to claim 1, **characterized in that** the echo coherent signal $R(t)$ is represented as below

$$R(t) = \gamma \cdot N \cdot \operatorname{rect}\left[\frac{t-t_0}{T_p}\right] \cdot \exp\left[jK_r\pi(t-t_0)^2\right] \cdot \exp\left[-j2\pi f_c t_0\right]$$

wherein $\gamma$ represents a constant related to a target scattering coefficient and a gain of an antenna pattern, $t$ represents a fast time, $t_n$ represents a delay time for a transmit signal from the transmit channel to a target and then reflected back to a nth receiving antenna, $T_p$ is a pulse width, $j$ is an imaginary unit, $K_r$ is a frequency modulating rate, $f_c$ is a radar carrier frequency, and $n = 1,\cdots,N$.

5. The spaceborne multi-channel SAR imaging system according to claim 1, **characterized in that** by a multi-channel sampling in azimuth direction of the plurality of columns of receiving antennas, pulse repetition frequency is lowered, but for each azimuth-directional receiving antenna assembly, an azimuth-directional signal is under-sampled, the azimuth-directional signal $u_n(\tau)$ received by a nth receiving channels is represented as below

$$u_n(\tau) = \gamma \cdot \exp\left[-j\frac{2\pi}{\lambda}\left(\sqrt{R_0^2 + (V_s\tau)^2} + \sqrt{R_0^2 + (V_s\tau - \Delta x_n)^2}\right)\right]$$

wherein $\tau$ represents a slow time, $\gamma$ represents a constant related to a target scattering coefficient and a gain of an antenna pattern, j is an imaginary unit, $\lambda$ is a radar wave length, $R_0$ represents a slope distance between the radar and the target, $V_s$ represents a radar velocity, and $\Delta x_n$ represents a distance in azimuth direction between the nth column of receiving channels and the transmit channel.

**Patentansprüche**

1. Weltraumgestütztes Mehrkanalradar-Bildgebungssystem mit synthetischer Apertur (weltraumgestütztes Mehrkanal-SAR-Bildgebungssystem), umfassend: eine Mehrzahl von Spalten von Empfangsantennen und eine Mehrzahl von elevationsgerichteten Digitalstrahlenbündelungseinheiten, die eine Mehrzahl von Empfangskanälen bilden, eine azimutgerichtete Spektrumrekonstruktionseinheit, eine SAR-Bildgebungsvorrichtung und einen Sendekanal, wobei die Mehrzahl von Spalten von Empfangsantennen in der Azimutrichtung des Mehrkanal-SAR-Bildgebungssystems angeordnet ist; jede der Mehrzahl von Spalten von Empfangsantennen eine Mehrzahl von elevationsgerichteten Empfangsantennenbaugruppen, die äquidistant in der Elevationsrichtung des Mehrkanal-SAR-Bildgebungssystems angeordnet sind, und eine elevationsgerichtete Digitalstrahlenbündelungseinheit einschließt; wobei jede der Mehrzahl von elevationsgerichteten Empfangsantennenbaugruppen so konfiguriert ist, dass sie ein Radarecho empfängt und elevationsgerichtete Echodaten generiert; wobei die durch die Mehrzahl von elevationsgerichteten Empfangsantennenbaugruppen empfangenen elevationsgerichteten Echodaten nach Durchlaufen der elevationsgerichteten Digitalstrahlenbündelungseinheit ein Echosignal bilden; wobei jeder Empfangskanal eine elevationsgerichtete Empfangsantennenbaugruppe, einen Verstärker mit niedrigem Eigenrauschen, einen Frequenzmischer, eine Abtastschaltung und Gewichtungsmittel einschließt, wobei eine Mehrzahl von durch die Mehrzahl von Spalten von Empfangsantennen generierten Echosignalen in die azimutgerichtete Spektrumrekonstruktionseinheit eintritt, um eine azimutgerichtete Spektrumrekonstruktion auszuführen, die azimutgerichtete Spektrumrekonstruktionseinheit, deren Eingangsenden jeweils mit Ausgangsenden der Mehrzahl von elevationsgerichteten Digitalstrahlenbündelungseinheiten verbunden sind, so konfiguriert ist, dass sie eine azimutgerichtete Spektrumrekonstruktion an der Mehrzahl von aus der Mehrzahl von Spalten von Empfangsantennen ausgegebenen Echosignalen ausführt, ein SAR-Echosignal generiert und dieses ausgibt, und die Bildgebungsvorrichtung, deren Eingangsende mit dem Ausgangsende der azimutgerichteten Spektrumrekonstruktionseinheit verbunden ist, so konfiguriert ist, dass sie das SAR-Echosignal empfängt und aus dem SAR-Echosignal ein SAR-Bild generiert, wobei ein Modell des durch die elevationsgerichtete Empfangsantennenbaugruppe empfangenen Radarechosignals wie folgt dargestellt ist:

$$r_n(t) = \gamma \cdot \text{rect}\left[\frac{t - t_n}{T_p}\right] \cdot \exp\left[jK_r\pi(t - t_n)^2\right] \cdot \exp[-j2\pi f_c t_n],$$

wobei $\gamma$ eine auf einen Zielstreuungskoeffizienten und einen Gewinn eines Antennenmusters bezogene Konstante darstellt, $t$ eine schnelle Zeit darstellt, $t_n$ eine Laufzeit für ein Sendesignal darstellt, das vom Sendekanal zu einem Ziel gesendet und dann zu einer n-ten elevationsgerichteten Empfangsantenne zurückgeworfen wird, $T_p$ eine Impulsbreite ist, $j$ eine imaginäre Einheit ist, $K_r$ eine Frequenzmodulationsgeschwindigkeit ist, $f_c$ eine Radarträgerfrequenz ist, $n=1,...,N,$ und die Laufzeit $t_n$ wie folgt dargestellt ist:

$$t_n = t_0 - \frac{d_n \cdot \sin(\theta(t_0) - \beta)}{C}$$

$t_0$ eine Laufzeit für ein Sendesignal darstellt, das vom Sendekanal zu einem Ziel gesendet und dann zu einem Bezugsempfangskanal zurückgeworfen wird; der Bezugsempfangskanal ausgewählt ist als ein Empfangskanal an der mittleren Position in der Elevationsrichtung;

$$\frac{d_n \cdot \sin(\theta(t_0) - \beta)}{C}$$

in dem Modell der Echosignale einen Signallaufzeitunterschied zwischen einem n-ten Empfangskanal und dem Bezugsempfangskanal darstellt, $d_n$ einen Abstand zwischen dem n-ten Empfangskanal und dem Bezugsempfangs-

kanal darstellt, $\theta(t_0)$ einen Herabblickwinkel des Ziels darstellt, $\beta$ einen Herabblickwinkel der Normalen einer Antenne, auch als Antenneninstallationswinkel bezeichnet, darstellt, und $C$ eine Übertragungsgeschwindigkeit einer Radarwelle darstellt,

wobei die Digitalstrahlenbündelungseinheit in jeder der Mehrzahl von Spalten von Empfangsantennen so konfiguriert ist, dass sie einen Phasenunterschied jedes Empfangskanals so kompensiert, dass jede Antennenbaugruppe ein echokohärentes Signal empfängt, das schließlich in der Digitalstrahlenbündelungseinheit kumuliert wird, um ein Ausgangssignal zu bilden, und sie das Ausgangssignal in Form eines Hochleistungsschmalbündels bildet; wobei eine Orientierung des Hochleistungsschmalbündels eingestellt wird, indem ein echtzeitgewichteter Wert jedes Empfangskanals in Echtzeit verändert wird, so dass Reflexionsechos der Erde empfangen werden,

wobei ein Muster jeder Spalte von Empfangsantennen einen ganzen Schwad abdeckt, um Echos innerhalb des Schwades zu empfangen,

wobei die azimutgerichtete Spektrumrekonstruktionseinheit ferner so konfiguriert ist, dass sie vorgefilterte Signale durch Vorfiltern von azimutgerichteten Signalen mit einer B-Bandbreite durch N Vorfilter auf der Grundlage der Mehrkanal-Datenrekonstruktionstheorie erfasst, wobei jedes der vorgefilterten Signale mit einer B/N-Abtastfrequenz abgetastet wird und ursprüngliche Tiefpasssignale aus Abtastsignalen von N Kanälen durch Rekonstruktionsfilter wiederhergestellt werden, die aus Übertragungsfunktionen der Vorfilter vor der Datenabtastung gewonnen werden, wobei die Vorfilter unter Verwendung der Mehrzahl von Spalten von Empfangsantennen gebildet werden, die durch die Vorfilter gebildete Matrix $H(f)$ dargestellt ist als

$$H(f) = \begin{bmatrix} H_1(f) & H_2(f) & \cdots & H_N(f) \\ H_1(f+PRF) & H_2(f+PRF) & \cdots & H_N(f+PRF) \\ \vdots & \vdots & \ddots & \vdots \\ H_1(f+(N-1)PRF) & H_2(f+(N-1)PRF) & \cdots & H_N(f+(N-1)PRF) \end{bmatrix}$$

wobei $H_n(f)$ einen Vorfilter einer n-ten Spalte von azimutgerichteten Kanälen darstellt, feine azimutgerichtete Frequenz darstellt, PRF eine Impulsfolgefrequenz darstellt und die Beziehung zwischen den Rekonstruktionsfiltern $P(f)$ und $H(f)$ dargestellt ist als

$$P(f) = H^{-1}(f) = \begin{bmatrix} P_{11}(f) & P_{12}(f+PRF) & \cdots & P_{1N}(f+(N-1)PRF) \\ P_{21}(f) & P_{22}(f+PRF) & \cdots & P_{2N}(f+(N-1)PRF) \\ \vdots & \vdots & \ddots & \vdots \\ P_{N1}(f) & P_{N2}(f+PRF) & \cdots & P_{NN}(f+(N-1)PRF) \end{bmatrix}$$

und azimutgerichtete Spektren unter Verwendung der erfassten Rekonstruktionsfilter wiederhergestellt werden, um Echos für die Radar-Bildgebung zu generieren, wobei $P_{ij}(f)$ einen Wert des Rekonstruktionsfilters bei einer Doppler-Frequenz von $f + (j-1)PRF$ in einem i-ten azimutgerichteten Kanal darstellt.

2. Weltraumgestütztes Mehrkanal-SAR-Bildgebungssystem nach Anspruch 1, **dadurch gekennzeichnet, dass** jede der Mehrzahl von elevationsgerichteten Empfangsantennenbaugruppen eine elevationsgerichtete Empfangsunterantenne umfasst und ein Muster jeder elevationsgerichteten Empfangsunterantenne einen ganzen Schwad abdeckt, um Echos innerhalb des Schwades zu empfangen.

3. Weltraumgestütztes Mehrkanal-SAR-Bildgebungssystem nach Anspruch 1, **dadurch gekennzeichnet, dass** der echtzeitgewichtete Wert $wk(t)$ jedes Kanals wie folgt dargestellt ist:

$$w_k(t) = \exp\left(-j2\pi \frac{d_\kappa}{\lambda} \sin(\theta(t)-\beta)\right)$$

wobei $t$ eine schnelle Zeit darstellt, $j$ eine imaginäre Einheit ist, $d_n$ einen Abstand zwischen dem n-ten Empfangskanal und dem Bezugsempfangskanal darstellt, $\lambda$ eine einem Radarträger entsprechende Wellenlänge ist, $\theta(t)$ einen Herabblickwinkel darstellt, der einem Echo zu einer Zeit $t$ entspricht, und $\beta$ einen Herabblickwinkel der Normalen einer Antenne darstellt.

**4.** Weltraumgestütztes Mehrkanal-SAR-Bildgebungssystem nach Anspruch 1, **dadurch gekennzeichnet, dass** das echokohärente Signal $R(t)$ wie folgt dargestellt ist:

$$R(t) = \gamma \cdot N \cdot \text{rect}\left[\frac{t - t_0}{T_p}\right] \cdot \exp\left[jK_r\pi(t - t_0)^2\right] \cdot \exp\left[-j2\pi f_c t_0\right]$$

wobei $\gamma$ eine auf einen Zielstreuungskoeffizienten und einen Gewinn eines Antennenmusters bezogene Konstante darstellt, $t$ eine schnelle Zeit darstellt, $t_n$ eine Laufzeit für ein Sendesignal darstellt, das vom Sendekanal zu einem Ziel gesendet und dann zu einer n-ten Empfangsantenne zurückgeworfen wird, $T_p$ eine Impulsbreite ist, $j$ eine imaginäre Einheit ist, $K_r$ eine Frequenzmodulationsgeschwindigkeit ist, $f_c$ eine Radarträgerfrequenz ist und $n=1,...,N$.

**5.** Weltraumgestütztes Mehrkanal-SAR-Bildgebungssystem nach Anspruch 1, **dadurch gekennzeichnet, dass** durch eine Mehrkanal-Abtastung in der Azimutrichtung der Mehrzahl von Spalten von Empfangsantennen die Impulsfolgefrequenz verringert wird, aber für jede azimutgerichtete Empfangsantennenbaugruppe ein azimutgerichtetes Signal unterabgetastet wird, das durch einen n-ten Empfangskanal empfangene azimutgerichtete Signal $u_n(\tau)$ wie folgt dargestellt ist:

$$u_n(\tau) = \gamma \cdot \exp\left[-j\frac{2\pi}{\lambda}\left(\sqrt{R_0^2 + (V_s\tau)^2} + \sqrt{R_0^2 + (V_s\tau - \Delta x_n)^2}\right)\right]$$

wobei $\tau$ eine langsame Zeit darstellt, $\gamma$ eine auf einen Zielstreuungskoeffizienten und einen Gewinn eines Antennenmusters bezogene Konstante darstellt, $j$ eine imaginäre Einheit ist, $\lambda$ eine Radarwellenlänge ist, $R_0$ einen Flankenabstand zwischen dem Radar und dem Ziel darstellt, $V_s$ eine Radargeschwindigkeit darstellt und $\Delta x_n$ einen Abstand in Azimutrichtung zwischen der n-ten Spalte von Empfangskanälen und dem Sendekanal darstellt.

## Revendications

**1.** Système d'imagerie de radar à ouverture synthétique à plusieurs canaux spatiaux, comprenant : une pluralité de colonnes d'antennes de réception et une pluralité d'unités de formation numérique de faisceau à élévation-directionnelle constituant une pluralité de canaux de réception, une unité de reconstruction de spectre en direction azimutale, un dispositif d'imagerie de radar à ouverture synthétique, et un canal de transmission, où la pluralité de colonnes d'antennes de réception est disposée dans la direction azimutale du système d'imagerie de radar à ouverture synthétique à plusieurs canaux; chaque colonne de la pluralité de colonnes d'antennes de réception comprend une pluralité d'ensembles d'antennes de réception à élévation-directionnelle disposées à équidistance dans la direction d'élévation du système d'imagerie de radar à ouverture synthétique à plusieurs canaux et une unité de formation numérique de faisceau à élévation-directionnelle; chaque ensemble de la pluralité d'ensembles d'antennes de réception à élévation-directionnelle étant prévu pour recevoir un écho radar et pour générer des données d'écho en direction d'élévation ; les données d'écho en direction d'élévation reçues par la pluralité d'ensembles d'antennes de réception à élévation-directionnelle formant un signal d'écho après passage par l'unité de formation numérique de faisceau à élévation-directionnelle; où chaque canal de réception comprend un ensemble d'antenne de réception à élévation directionnelle, un amplificateur à faible bruit, un mélangeur de fréquences, un circuit d'échantillonnage et un moyen de pondération, où une pluralité de signaux d'écho générés par la pluralité de colonnes d'antennes de réception entre dans l'unité de reconstruction de spectre en direction azimutale pour implémenter une reconstruction de spectre en direction azimutale;

l'unité de reconstruction de spectre en direction azimutale, dont les extrémités d'entrée sont reliées à des extrémités de sortie respectives de la pluralité d'unités de formation numérique de faisceau à élévation-directionnelle, est prévue pour exécuter une reconstruction de spectre en direction azimutale sur la pluralité de signaux d'écho émis par la pluralité de colonnes d'antennes de réception, générer et émettre un signal d'écho de radar à ouverture synthétique; et

le dispositif d'imagerie, dont l'extrémité d'entrée est reliée à l'extrémité de sortie de l'unité de reconstruction de spectre en direction azimutale, est prévu pour recevoir le signal d'écho de radar à ouverture synthétique et générer une image de radar à ouverture synthétique à partir du signal d'écho de radar à ouverture synthétique,

un modèle du signal d'écho radar reçu par l'ensemble d'antenne de réception à élévation directionnelle étant représenté comme suit:

$$r_n(t) = \gamma \cdot \text{rect}\left[\frac{t-t_n}{T_p}\right] \cdot \exp\left[jK_r\pi(t-t_n)^2\right] \cdot \exp[-j2\pi f_c t_n],$$

où $\gamma$ représente une constante relative à un coefficient de diffusion de consigne et un gain d'un diagramme d'antenne, $t$ représente un temps accéléré, $t_n$ représente un délai de temporisation pour un signal de transmission du canal de transmission vers une cible avant réflexion vers une $n^{\text{ième}}$ antenne de réception à élévation-directionnelle, $T_p$ est une largeur d'impulsion, $j$ est une unité imaginaire, $K_r$ est une vitesse de modulation de fréquence, $f_c$ est une fréquence porteuse de radar, n=1,...N, et le délai de temporisation $t_n$ est représenté comme suit:

$$t_n = t_0 - \frac{d_n \cdot \sin(\theta(t_0) - \beta)}{C}$$

$t_0$ représente un délai pour un signal de transmission depuis le canal de transmission vers une cible avant réflexion vers un canal de réception de référence ; le canal de réception de référence est sélectionné en tant que canal de réception en position centrale dans la direction d'élévation;

$$\frac{d_n \cdot \sin(\theta(t_0) - \beta)}{C}$$

dans le modèle des signaux d'écho représente une différence de délai de signal entre un $n^{\text{ième}}$ canal de réception et le canal de réception de référence, $d_n$ représente une distance entre le $n^{\text{ième}}$ canal de réception et le canal de réception de référence, $\theta(t_0)$ représente un angle d'incidence de la cible, $\beta$ représente un angle d'incidence de la normale d'une antenne, également qualifié d'angle d'installation d'antenne, et C représente une vitesse de transmission d'une onde radar,

où l'unité de formation numérique de faisceau de chaque colonne de la pluralité de colonnes d'antennes de réception est prévue pour compenser une différence de phase de chaque canal de réception, de telle manière que chaque ensemble d'antenne reçoit un signal cohérent d'écho, lequel est finalement cumulé dans l'unité de formation numérique de faisceau pour former un signal de sortie, et pour former le signal de sortie comme faisceau en pinceau à gain élevé ; où une orientation du faisceau en pinceau à gain élevé est réglée par variation en temps réel d'une valeur pondérée en temps réel de chaque canal de réception de manière à recevoir des échos de réflexion de la terre, où un diagramme de chaque colonne d'antennes de réception couvre toute une bande de balayage pour recevoir des échos à l'intérieur de la bande de balayage,

où l'unité de reconstruction de spectre en direction azimutale est en outre prévue pour acquérir des signaux préfiltrés par pré-filtrage de signaux en direction azimutale avec une largeur de bande B par N pré-filtres, sur la base de la théorie de reconstruction de données multi-canaux, chacun des signaux pré-filtrés étant échantillonné avec un taux d'échantillonnage B/N, et des signaux passe-bande initiaux étant récupérés depuis des signaux d'échantillonnage de N canaux par des filtres de reconstruction, obtenus à partir de fonctions de transfert des pré-filtres avant l'échantillonnage de données, les pré-filtres étant formés en recourant à la pluralité de colonnes d'antennes de réception, la matrice H(f) formée par les pré-filtres est représentée comme suit:

$$H(f) = \begin{bmatrix} H_1(f) & H_2(f) & \cdots & H_N(f) \\ H_1(f+PRF) & H_2(f+PRF) & \cdots & H_N(f+PRF) \\ \vdots & \vdots & \ddots & \vdots \\ H_1(f+(N-1)PRF) & H_2(f+(N-1)PRF) & \cdots & H_N(f+(N-1)PRF) \end{bmatrix}$$

où $H_n(f)$ représente un pré-filtre d'une $n^{ième}$ colonne de canaux en direction azimutale, $f$ représente une fréquence en direction azimutale, PRF représente une fréquence de répétition d'impulsion, et la relation entre les filtres de reconstruction $P(f)$ et $H(f)$ est représentée comme suit:

$$P(f) = H^{-1}(f) = \begin{bmatrix} P_{11}(f) & P_{12}(f+PRF) & \cdots & P_{1N}(f+(N-1)PRF) \\ P_{21}(f) & P_{22}(f+PRF) & \cdots & P_{2N}(f+(N-1)PRF) \\ \vdots & \vdots & \ddots & \vdots \\ P_{N1}(f) & P_{N2}(f+PRF) & \cdots & P_{NN}(f+(N-1)PRF) \end{bmatrix}$$

et des spectres en direction azimutale étant récupérés en recourant aux filtres de reconstruction acquis, de manière à générer des échos pour imagerie radar, où $P_{ij}(f)$ représente une valeur du filtre de reconstruction à une fréquence Doppler de $f+(j-1)PRF$ dans un $i^{ième}$ canal en direction azimutale.

2. Système d'imagerie de radar à ouverture synthétique à plusieurs canaux spatiaux selon la revendication 1, **caractérisé en ce que** chaque ensemble de la pluralité d'ensembles d'antennes de réception à élévation-directionnelle comprend une sous-antenne de réception en direction d'élévation, et un diagramme de chaque sous-antenne de réception en direction d'élévation couvre toute une bande de balayage pour recevoir des échos à l'intérieur de la bande de balayage.

3. Système d'imagerie de radar à ouverture synthétique à plusieurs canaux spatiaux selon la revendication 1, **caractérisé en ce que** la valeur pondérée en temps réel $wk(t)$ de chaque canal est représentée comme suit:

$$w_k(t) = \exp\left(-j2\pi \frac{d_n}{\lambda}\sin(\theta(t)-\beta)\right)$$

où $t$ représente un temps accéléré, $j$ est une unité imaginaire, $d_n$ représente une distance entre le $n^{ième}$ canal de réception et le canal de réception de référence, $\lambda$ est une longueur d'onde correspondant à une porteuse de radar, $\theta(t)$ représente un angle d'incidence correspondant à un écho à un moment $t$, et $\beta$ représente un angle d'incidence de la normale d'une antenne.

4. Système d'imagerie de radar à ouverture synthétique à plusieurs canaux spatiaux selon la revendication 1, **caractérisé en ce que** le signal cohérent d'écho $R(t)$ est représenté comme suit:

$$R(t) = \gamma \cdot N \cdot \text{rect}\left[\frac{t-t_0}{T_p}\right] \cdot \exp\left[jK_r\pi(t-t_0)^2\right] \cdot \exp[-j2\pi f_c t_0]$$

où $\gamma$ représente une constante relative à un coefficient de diffusion de consigne et un gain d'un diagramme d'antenne, $t$ représente un temps accéléré, $t_n$ représente un délai de temporisation pour un signal de transmission du canal de transmission vers une cible avant réflexion vers une n$^{\text{ième}}$ antenne de réception à élévation-directionnelle, $T_p$ est une largeur d'impulsion, $j$ est une unité imaginaire, $K_r$ est une vitesse de modulation de fréquence, $f_c$ est une fréquence porteuse de radar, et $n=1,...N$.

5. Système d'imagerie de radar à ouverture synthétique à plusieurs canaux spatiaux selon la revendication 1, **caractérisé en ce que** par un échantillonnage multi-canaux en direction azimutale de la pluralité de colonnes d'antennes de réception, une fréquence de répétition d'impulsion est affaiblie, mais pour chaque ensemble d'antenne de réception en direction azimutale, un signal en direction azimutale est sous-échantillonné, le signal en direction azimutale $u_n(\tau)$ reçu par un n$^{\text{ième}}$ canal de réception est représenté comme suit:

$$u_n(\tau) = \gamma \cdot \exp\left[ -j\frac{2\pi}{\lambda}\left( \sqrt{R_0^2 + (V_s\tau)^2} + \sqrt{R_0^2 + (V_s\tau - \Delta x_n)^2} \right) \right]$$

où $\tau$ représente un temps lent, $\gamma$ représente une constante relative à un coefficient de diffusion de consigne et un gain d'un diagramme d'antenne, $j$ est une unité imaginaire, $\lambda$ est une longueur d'onde radar, $R_0$ représente une distance de pente entre le radar et la cible, $V_s$ représente une vitesse de radar, et $\Delta x_n$ représente une distance en direction azimutale entre la n$^{\text{ième}}$ colonne de canaux de réception et le canal de transmission.

Fig.1

Fig.2

Fig.3

Fig.4

Fig.5

channel
interval

low-noise
amplification

low-noise
amplification

low-noise
amplification

low-noise
amplification

low-noise
amplification

frequency
mixing

frequency
mixing

frequency
mixing

frequency
mixing

frequency
mixing

A/D
conversion

A/D

A/D

A/D

A/D

A/D

real-time
weighting

$w_1(t)$

$w_2(t)$

$\cdots$

$\cdots$

$w_N(t)$

coherent
accumulation

$\Sigma$

digital beam
forming output

Fig.6

radar velocity

minimum slope distance

Fig.7

Fig.8

look-down angle (deg)

Fig.9

distance to Earth (km)

Fig.10

Fig.11

multiple evenly-aligned receiving antennas are arranged in elevation direction, echoes are received by the digital beam forming technique
— 101

a plurality of columns of receiving antenna assemblies are arranged in a flight path direction of a radar, the Doppler spectrum is recovered by an azimuth-directional multi-channel reconstruction technique
— 102

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Multidimensional Waveform Encoding: A New Digital Beamforming Technique for Synthetic Aperture Radar Remote Sensing. **GERHARD KRIEGER et al.** IEEE Transactions on Geoscience and Remote Sensing. IEEE Service Center, 01 January 2008, vol. 46, 31-46

- Unambiguous SAR signal reconstruction from nonuniform displaced phase center sampling. **GERBERT N. et al.** IEEE Geoscience and Remote Sensing Letters. IEEE Service Center, 01 October 2004, vol. 1, 260-264
- **BORDONI F. et al.** Calibration Error Model for Multichannel Spaceborne SAR Systems Based on Digital Beamforming. *2013 European Radar Conference EMA,* 09 October 2013, 184-187